# EUROPEAN PATENT SPECIFICATION

(11) **EP 2 787 087 B1**
(45) Date of publication and mention of the grant of the patent: **26.07.2017**
(21) Application number: 12840247.6
(22) Date of filing: 11.10.2012
(51) Int. Cl.: C21B 7/24, F27D 21/00, F27B 1/20, H04N 7/18, F27B 1/28

(54) **SYSTEM AND METHOD FOR ONLINE MEASUREMENT OF BLAST FURNACE CHARGE LEVEL**
SYSTEM UND VERFAHREN ZUR ONLINE-MESSUNG EINES HOCHOFENLADEZUSTANDS
SYSTÈME ET PROCÉDÉ DE MESURE EN LIGNE DU NIVEAU DE CHARGE D'UN HAUT-FOURNEAU

(30) Priority: 11.10.2011 CN 201110307101
(43) Date of publication of application: 08.10.2014
(73) Proprietor: Gao, Zhengkai, Beijing 100081 (CN); Zhao, Chengping, Beijing 100081 (CN); Gao, Yong, Beijing 100081 (CN); Gao, Tai, Beijing 100081 (CN); Gao, Qian, Beijing 100081 (CN)
(72) Inventor: Gao, Zhengkai, Beijing 100081 (CN); Zhao, Chengping, Beijing 100081 (CN); Gao, Yong, Beijing 100081 (CN); Gao, Tai, Beijing 100081 (CN); Gao, Qian, Beijing 100081 (CN)
(74) Representative: 2K Patentanwälte Blasberg Kewitz & Reichel
(86) International application number: PCT/CN2012/082799
(87) International publication number: WO 2013/053329

(56) References cited:
- EP-A2- 2 202 536
- BE-A1- 897 331
- CN-A- 1 877 249
- CN-A- 102 382 918
- FR-A1- 2 506 329
- JP-A- S6 281 513
- JP-A- 2002 220 610
- US-A- 4 110 617
- US-A- 4 322 627
- US-A- 4 588 297

## Description

### Field of the Invention

The present invention generally relates to a field of measuring of blast furnaces, and particularly to a system and method for on-line measuring a burden surface in a blast furnace.

### Background of the Invention

A metallurgical blast furnace usually operates in a closed state, and has an in-furnace environment of such as high temperature, high pressure, high dust content and high humidity. Hence, operators can not directly observe in-furnace information, e.g., burden surface in the furnace, charging process and operation states of in-furnace devices, and he has to deduce the in-furnace information from values of conventional detecting meters detecting parameters such as temperature, pressure, flow rate and so on.

In order to obtain the desired in-furnace information, infrared scanning and microwave scanning methods have been used to detect the interior of the blast furnace. However, these detections require applying complicated detecting and receiving devices and complicated computing system to process obtained data. In addition, those data all are distance information which needs to be restructured to form simulated image, and "WYSIWYG (What You See Is What You Get)" observation images may not be directly obtained.

The inventors of the present patent application proposed a detection device with an infrared image camera in Chinese Patent ZL02121548.0 and ZL200310122476.4, wherein observation images are obtained by receiving infrared light emitted from the burden itself in the blast furnace. However, during furnace charging process or in a state of a lower temperature of the burden, infrared light gets weak, and clear infrared image cannot be obtained so that the in-furnace information cannot be detected in real time. Hence, this type of detection device can only operate during a particular time period and under particular conditions.

The inventors of the present patent application inventively used laser beam detection device to obtain in-furnace information which was described in Chinese Patent ZL200610089415.6. In this patent, a plurality of laser beams simultaneously propagate in the in-furnace space and form a planar fan-shaped laser beam bundle (or two planar fan-shaped bundles which cross each other). A video camera is used to shoot the laser beam propagation pattern. As such, when an in-furnace equipment, such as a burden distributing device, passes through the fan-shaped laser beam bundle(s), propagation of the laser beam will be interrupted so as to change the laser light propagation pattern (i.e. use the laser light propagation pattern for tracing). Operation situations of the in-furnace equipment can be reflected from all the images shot by the video camera. When charged materials passing through the fan-shaped laser beam bundle, a similar effect is produced so that the burden material charging process can be also monitored.

Noticeably, the solution of Chinese Patent ZL200610089415.6 may also be used to obtain burden surface information (e.g., burden surface position and/or profile). When each laser beam in the planar fan-shaped laser beam bundle is incident onto the burden surface, a terminal point (or interception point) of each laser beam on the burden surface corresponds to an actual detection point of the burden surface. The terminal point (actual detection point) appears a "bright point" in the in-furnace image shot by the video camera. The terminal points of the plurality of laser beams on the burden surface correspond to a plurality of discrete bright points. The video camera shoots image containing these bright points at one moment. On the one hand, this image may be directly output to a display device so that operators can learn about profile and position of the current burden surface by observing the bright point distribution in the shot image (namely, "WYSIWYG"). On the other hand, by means of a computer, the bright point position in the image may be extracted from the image, and when in combination with the position of the video camera and angular information of shooting, corresponding actual positions of the bright points in the furnace may be computed. Further, a fitting algorithm may be applied to fit these discrete points into a continuous curve of burden surface profile, and the curve can be sent to a display device.

As known from further analysis, the Chinese Patent ZL200610089415.6 in fact uses laser beam, which is visible for a video camera with high penetrability, to "illuminate" the interior of the furnace. Certainly, due to excellent directionality of laser beams, the "illuminated" portion only appears beam lines and interception points in the laser beam bundle propagation path. Due to such an "illumination", operators may observe the in-furnace information in a "WYSIWYG" manner via the video camera, which is obviously different with the previous distance-measuring detection means.

Another Chinese Patent ZL200710005609.8 also discloses a method of using laser beam to measure burden surface profile in blast furnace, wherein a laser ranging principle is used, and distance information of each measurement point on the burden surface is calculated by measuring a time differential from emission of a laser light to reception of the reflected laser beam, so as to obtain the profile of burden surface. This patent (ZL200710005609.8) does not use a device such as a video camera to obtain the aforesaid image of the "bright points" illuminated by the laser light, so the in-furnace information may not be observed in a "WYSIWYG" manner. The principles of the method of the patent are, in fact, similar to the above-mentioned other distance-measuring detection means such as microwave scanning method.

Reference is made back to the laser beam detection device of the Chinese Patent ZL200610089415.6. In this device, in order to obtain sufficient detection information, each planar fan-shaped laser beam bundle needs to consist of a sufficiently large number of laser beams, for example, usually 10 or more laser beams forming denser laser beam propagation patterns inside the furnace space (for detecting in-furnace equipments and burden charging process), and denser bright points on the burden surface (for detecting burden surface information). This needs a relatively large number of laser emitters. On the one hand, it makes the facility cost very high, and on the other hand, use of so many laser emitters makes the device volume very large. It is very difficult to keep these devices working normally for a long period of time under the severe in-furnace environment (such as high temperature, high pressure, high dust content and high humidity). Further, regarding detection of burden surface information, the "bright point" of each laser beam in the burden surface corresponds to an actual detection point, but the positions on the burden surface except for the actual detection points are not detected, or these positions may be fitted by an algorithm during subsequent image processing. If a detection result closer to the actual situation is to be obtained, more actual detection points are needed, so more laser emitters needed. It is apparent that the number of laser emitters cannot be expanded unlimitedly, so the actual detection points on burden surface can only be increased with limit. Document US4322627 A1 and US4588297 A1 disclose a system for on-line measuring a burden surface in a blast furnace to detect burden surface information based on triangulation. In such a system, a video camera and a receiver are located in the plane of the scanning trajectory in order to simplify the calculations of the distance between the actual points on the burden surface and the camera or the receiver.

### Summary of the Invention

An object of the present invention is to overcome one or more drawbacks in the prior art and provide a system and method for on-line measuring a burden surface in a blast furnace.

According to one aspect of the present invention, there is provided a system for on-line measuring a burden surface in a blast furnace to detect burden surface information in the blast furnace, the system comprising:
a laser emitter disposed above blast furnace burden surface, and emitting a laser beam to continuously scan at least one portion of the burden surface;
a video camera configured to shoot burden surface images, each of which comprises a detection point pattern formed by the laser beam incident on the burden surface;
an image processing device configured to receive the burden surface image from the video camera and output the burden surface information.

According to another aspect of the present invention, this invention is to provide a method for on-line measuring burden surface in blast furnace to detect burden surface information comprising:
using a laser beam to continuously scan at least one portion of the burden surface inside the blast furnace; the laser beam being incident on the burden surface to form detection point pattern;
obtaining burden surface images, and each of the images comprising the detection point pattern;
obtaining the burden surface information based on the burden surface images.

The present invention has the following advantageous effects:
1) As compared with the Chinese Patent ZL200610089415.6, the number of the actual detection points on the burden surface using the present system and method for on-line measuring a burden surface in a blast furnace is only limited by laser scanning speed and a sampling frequency of the video camera. It is irrelevant to the number of the employed laser emitters. On the one hand, this may substantially reduce the cost of the system, and on the other hand, massive actual detection data may be generated from a large number of actual detection points. As such, burden surface information, including both burden surface images obtained through "WYSIWYG" and the generated burden surface profile curve, is more conforming to the actuality.
2) As compared with the Chinese Patent ZL200610089415.6, the system for on-line measuring a burden surface in a blast furnace according to the present invention may use a less number of laser emitter (even one laser emitter), so it is more advantageous to minimize the system volume and may simplify laser emitter protective measures.

### Brief Description of Drawings

Fig.1 is a schematic view of a first embodiment according to the present invention;
Fig.2 is a schematic view of a second embodiment according to the present invention;
Fig.3 illustrates an example of a burden surface curve generated by burden surface images acquired by the video camera.

### Detailed Description of Embodiments

The present invention will be further described in detail with reference to drawings and embodiments.

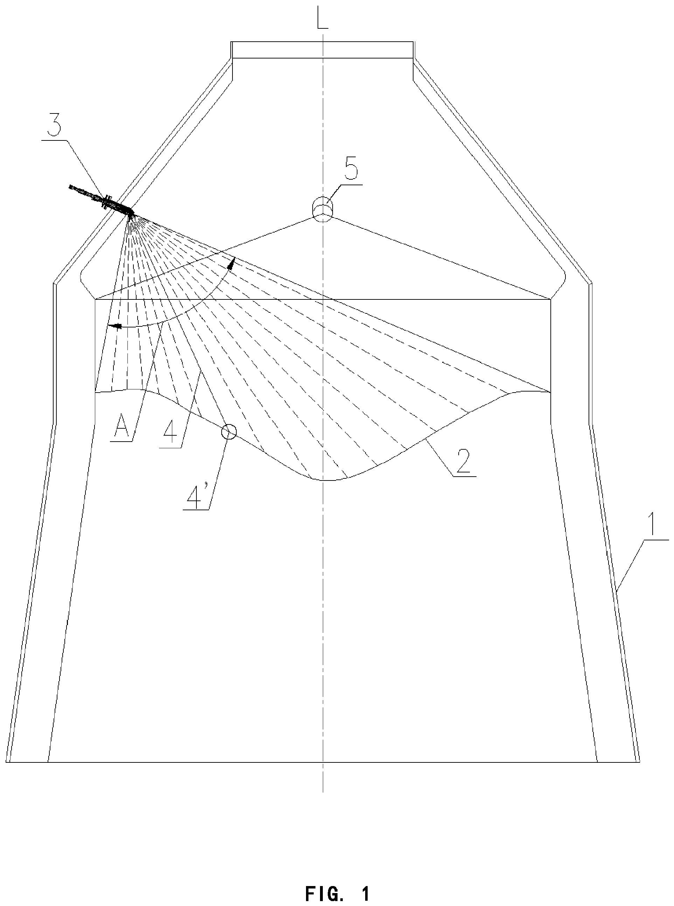

Referring to Fig.1, a blast furnace 1 is generally in a central symmetrical shape around a central axis L, and a burden surface 2 of the charged burden is also usually in a substantially central symmetrical shape around the central axis L. In the cross-sectional view of Fig.1, the central symmetry is represented as left-right symmetry around the axis L.

In the embodiment shown in Fig.1, a system for on-line measuring burden surface in a blast furnace according to the present invention comprises a laser emitter 3 and a video camera 5 disposed above the burden surface 2. The laser emitter 3 and the video camera 5 can be positioned and/or disposed in the blast furnace 1 in a conventional manner, e.g., in a manner as stated in the Chinese Patent ZL200610089415.6.

The laser emitter 3 transmits one laser beam 4 which is "visible" for the video camera 5. Noticeably, "visible" for the video camera here means that a light sensing element used by the video camera 5 is sensitive to the frequency of the laser beam 4, i.e., the video camera 5 can capture the laser light with the frequency. In practice, the laser beam 4 can be either visible laser light or invisible laser light such as infrared laser light or ultraviolet laser light.

The laser emitter 3 is disposed properly so that the laser beam 4 can perform continuous scanning of at least one portion of or all over the burden surface 2. In the example shown in Fig.1, the laser emitter 3 is disposed at the furnace wall. The solid line indicated by number label "4" represents a current position of the laser beam 4, and other laser beams drawn in dotted lines represent exemplary positions where the laser beam 4 might pass upon scanning, while two solid lines each at an end of the arrow A represent the scanning boundary of the laser beam 4.

In an embodiment, the laser emitter 3 is disposed to rotate around a pivot so that the laser beam 4 can scan the burden surface 2 in direction A. In another embodiment, the laser emitter 3 may be included in a laser scanner with a light deflecting device (e.g., a reflection mirror or a prism). By this device, when a laser beam is incident onto the deflecting device, and angle of the outgoing laser beam can be adjusted through rotating the deflecting device so that the laser beam 4 may scan the burden surface 2 in the direction A. In a further embodiment, which is not shown, the laser emitter may be disposed on a horizontal bar above the burden surface in the furnace, and the laser emitter 3 moves along the stationary horizontal bar or is moved with the bar together to scan the burden surface 2. In the example shown in Fig.1, the laser beam 4 rotates along direction A to scan the burden surface 2 along with linear path (e.g., a diameter of the blast furnace 1). In other embodiments, the laser beam 4 may scan the burden surface 2 along other predetermined paths.

The video camera 5 is used to shoot images of the burden surface 2. The burden surface images are in fact comprised of a series of frame images obtained in a time sequence, and each frame image comprises a detection point pattern formed by the laser beam 4 being incident onto the burden surface 2. When the laser beam 4 scans the burden surface 2, the detection point pattern formed by a terminal point of the laser beam 4 on the burden surface 2 appears a bright point 4' in the frame image, and the bright point 4' is an actual detection point of the laser beam 4 on the burden surface 2. During scanning, the bright point 4' moves continuously on the burden surface 2 as the laser beam 4 continuously moves, so as to form a scanning trajectory.

To enable the burden surface images shot by the video camera 5 to reflect burden surface profile changes, the video camera 5 should be disposed at a certain angle away from a plane where the scanning trajectory of the laser beam 4 lies. As shown in Fig.1, the video camera 5 may be disposed at the furnace wall opposed to the plane where the scanning trajectory of the laser beam 4 lies.

The video camera 5 may output the burden surface images to an image processing device (not shown) outside the blast furnace 1. According to the present invention, the image processing device may process the burden surface images in many modes.

In one mode, the image processing device may comprise a display which directly shows the burden surface images to operators. As such, as the laser beam 4 scans continuously, the bright point 4' advancing continuously can be seen in the display. Operators may learn about the burden surface information in real time, such as the profile and/or position of the burden surface by observing the displacement of the bright point 4'.

In another mode, the image processing device may further comprise a computing processing system. The computing processing system is configured to receive the burden surface images in real time, to superimpose the received current frame image with previously-received frame images, and to show the superimposed image in real time with the display. As such, as the laser beam 4 scans continuously, a pattern formed by a plurality of bright points 4' in a corresponding plurality of frame images can be seen on the display in real time. If the sampling frequency of the video camera 5 is high enough, a burden surface profile curve extending constantly formed by the bright points 4' in the plurality of frame images, can be seen in the display in real time. When the laser beam 4 scans the burden surface along a linear path, the superimposed image is a burden surface profile curve of the burden surface 2 along the linear path.

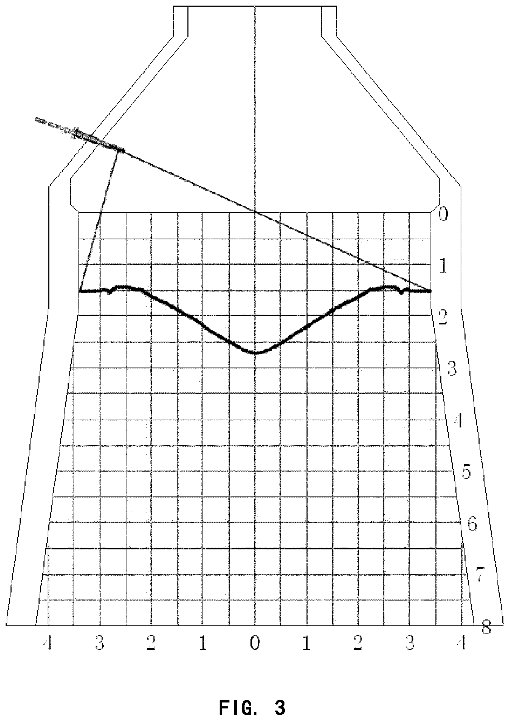

In a further mode, the computing processing system of the image processing device may process every burden surface image to obtain the position of the bright point in each frame image or selected plurality of frame images, and further may, in combination with parameters such as scanning direction and speed of the laser emitter and positional and angular information of the video camera, do computation to obtain the burden surface information data corresponding to the bright point 4' in each frame image. The burden surface information data may comprise actual position data of an actual detection point represented by the bright point 4' of the processed frame image. The processing system may further generate the burden surface profile curve from the computed burden surface information data, and output it to an output device such as a display. An example of the burden surface profile curve generated in this mode is shown in Fig.3. This processing mode can be a real-time mode also. The processing system computes and processes the current frame image in real time and obtains the burden surface information data of the bright point 4' in the current frame image, and generates burden surface profile curve in real time with burden surface information data obtained from the current frame image and the previous frame images. As such, when the generated burden surface profile curve is transferred and displayed in real time, with the laser beam 4 scanning continuously, a pattern formed by a plurality of actual detection points then will be shown. If the sampling frequency of the video camera 5 is high enough, a burden surface profile curve formed by the plurality of actual detection points extends constantly.

Since the laser beam 4 scans the burden surface 2 continuously, the number of the actual detection points (or bright points 4') which can be shot by the video camera 5 is only limited by the laser scanning speed and the sampling frequency of the video camera. For example, as for a certain segment of continuous scanning trajectory, the laser beam 4 passes a horizontal distance of 0.5 meters in one second and the sampling frequency of the video camera is 24 frames/second, so 24 actual detection points will be shot in the distance of 0.5 meters. If the images captured by the video camera at the rate of 24 frames per second are directly shown in display, operators will see a scanning image where the bright point moves continuously. If the burden surface image is generated by the computing processing system, the number of the actual detection points which may be utilized by the computing processing system far exceeds that in the mode described in Chinese Patent ZL200610089415.6. In this case, image which is more conforming to the actual burden surface can be generated.

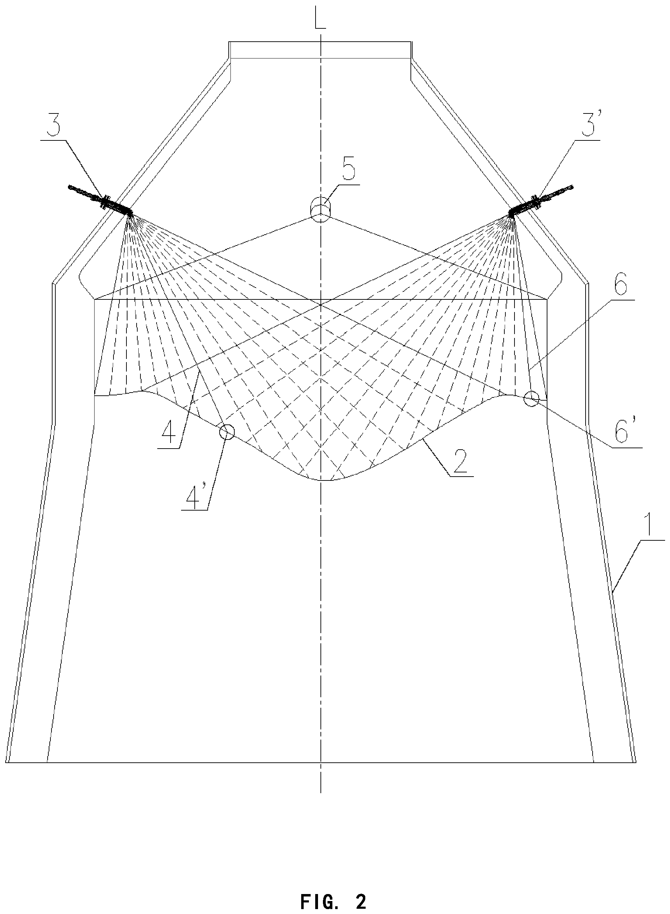

Fig.2 is a schematic view of a second embodiment according to the present invention. In this Figure, the system for on-line measuring a burden surface in a blast furnace according to the present invention comprises two laser emitters 3 and 3' which are disposed opposite to each other along a diameter of the blast furnace 1. As shown in Fig.2, when there is a dead angle which cannot be scanned by the laser emitter 3 (e.g., a bright point 6' corresponding to the current scanning position of a laser beam 6 generated from the laser emitter 3') due to the shape of the burden surface 2, the laser emitter 3' is used to scan to obtain the bright point 6' and its adjacent detection points. In addition, when illuminating distance of the laser emitter 3 cannot meet the need of scanning the whole burden surface due to limitation of the laser emitter power, the laser emitter 3' works together with laser emitter3 and each emitter may respectively scan a portion of the burden surface (e.g., scanning until adjacent the center of the burden surface) adjacent thereto so as to complete the scanning of the whole burden surface. In an embodiment, the lasers emitter 3 and 3' may scan the burden surface 2 at different time, whereupon each of the burden surface images obtained by the video camera will contain one bright point 4' or 6'. In another embodiment, the laser emitter 3 and 3' may scan the burden surface 2 simultaneously, whereupon each of the burden surface images obtained by the video camera 5 will contain two bright points 4' and 6'.

In the embodiment shown in Fig.2, the laser emitters and video camera may be disposed and the burden surface image may be processed by an image processing device in the same manner as in the embodiment shown in Fig.1.

## Claims

1. A system for on-line measuring a burden surface in a blast furnace to detect burden surface information, comprising:
at least one laser emitter (3) disposed above the burden surface (2) and emitting a laser beam (4) to continuously scan at least one portion of the burden surface along a scanning trajectory;
**characterized in that** the system further comprises:
a video camera (5) being disposed at a furnace wall opposed to a plane where the scanning trajectory of the laser beam (4) lies and being configured to shoot burden surface images each of which comprises a detection point pattern formed by a terminal point of the laser beam incident on and scanned over the burden surface and appearing as a bright point in the burden surface images; and
an image processing device configured to receive the burden surface images from the video camera (5) and to output burden surface information.

2. The system according to claim 1, wherein the burden surface information comprises a burden surface profile curve.

3. The system according to claim 1 or 2, wherein the at least one laser emitter (3) is disposed to be rotatable around a pivot, or the at least one laser emitter (3) is included in a laser scanner with a light deflecting device.

4. The system according to any of the proceeding claims, wherein the at least one laser emitter (3) is disposed on a horizontal bar in the blast furnace and is movable along the horizontal bar or alternatively is movable with the bar to scan the burden surface (2).

5. The system according to any of the proceeding claims, wherein the system comprises one laser emitter (3) or a plurality of said laser emitters (3) disposed at different positions.

6. The system according to any of the proceeding claims, wherein the system comprises two laser emitters disposed opposite to each other in a diameter direction of the blast furnace.

7. The system according to any of the proceeding claims, wherein the burden surface images comprise a series of frame images obtained in a time sequence and the image processing device comprises:
a computing processing system configured to receive the burden surface images in real time and superimpose the received current frame image with previously-received frame images; and
a display device configured to display the superimposed image in real time; wherein
the superimposed image comprises a burden surface profile curve formed by the detection point patterns.

8. The system according to any of the proceeding claims, wherein the image processing device comprises a computing processing system configured to compute and process the burden surface images and obtain burden surface information data corresponding to the detection point patterns.

9. The system according to claim 8, wherein the image processing device further comprises output means and the computing processing system further uses the burden surface information data to generate a burden surface profile curve and transfer it to the output means.

10. The system according to claim 8, wherein
the burden surface images comprise a series of frame images obtained in a time sequence, and
the computing processing system
computes and processes the current frame image in real time and obtains burden surface information data from the detection point pattern in the current frame image, and
generates the burden surface profile curve in real time by means of the burden surface information data obtained from the current frame image and previous frame images.

11. A method for on-line measuring a burden surface in a blast furnace to detect burden surface information in the blast furnace, comprising:
using at least one laser beam (4) to continuously scan at least one portion of the burden surface (2) in the blast furnace along a scanning trajectory, the laser beam being incident on the burden surface to form a detection point pattern;
obtaining burden surface images of the burden surface using a video camera disposed at a furnace wall opposed to a plane where the scanning trajectory of the laser beam (4) lies, wherein each image comprises a detection point pattern formed by a terminal point of the laser beam incident on and scanned over the burden surface and appearing as a bright point in the burden surface images; and
obtaining the burden surface information based on the burden surface images.

12. The method according to claim 11, wherein the burden surface information comprises a burden surface profile curve.

13. The method according to claim 11 or 12, wherein the burden surface images comprise a series of frame images obtained in a time sequence, a current frame image is superimposed in real time with previously-received frame images, and the superimposed image is output to the display means in real time;
wherein the superimposed image comprises a burden surface profile curve formed by the detection point patterns.

14. The method according to any of claim 11 to 13, wherein
the burden surface images are computed and processed to obtain burden surface information data corresponding to the detection point patterns, and
the burden surface information data are used to form a burden surface profile curve to be transferred to an output means.

15. The method according to claim 14, wherein the burden surface images comprise a series of frame images obtained in a time sequence, and a current frame image is computed and processed in real time to obtains burden surface information data from the detection point pattern in the current frame image; and the burden surface profile curve is generated in real time by means of the burden surface information data obtained from the current frame image and previous frame images.

## Patentansprüche

1. System zur on-line-Messung einer Belastungsoberfläche in einem Hochofen zum Erfassen einer Belastungsoberflächen-Information, umfassend:
mindestens einen Laseremitter (3), der über der Belastungsoberfläche (2) angeordnet ist und einen Laserstrahl (4) abstrahlt, um zumindest einen Abschnitt der Belastungsoberfläche entlang einer Abtasttrajektorie kontinuierlich abzutasten bzw. zu scannen;
**dadurch gekennzeichnet, dass** das System weiterhin umfasst:
eine Videokamera (5), die an einer Ofenwand angeordnet ist, die einer Ebene gegenüberliegt, in der die Abtasttrajektorie des Laserstrahls (4) liegt, und die so ausgelegt ist, dass diese Bilder der Belastungsoberfläche aufnimmt, von denen jedes ein Erfassungspunktmuster aufweist, das durch einen Endpunkt des Laserstrahls ausgebildet ist, der auf die Belastungsoberfläche auftrifft und über diese gescannt wird und das als heller Punkt in den Bildern der Belastungsoberfläche auftaucht; und
eine Bildverarbeitungseinrichtung, die ausgelegt ist, um die Bilder der Belastungsoberfläche von der Videokamera (5) zu erhalten und die Belastungsoberflächeninformation auszugeben.

2. System nach Anspruch 1, wobei die Belastungsoberflächeninformation eine Belastungsoberflächen-Profilkurve aufweist.

3. System nach Anspruch 1 oder 2, wobei der mindestens eine Laseremitter (3) um einen Drehpunkt drehbar angeordnet ist oder wobei der mindestens eine Laseremitter (3) in einem Laserscanner mit einer Lichtablenkungeinrichtung enthalten ist.

4. System nach einem der vorhergehenden Ansprüche, wobei der mindestens eine Laseremitter (3) auf einem horizontalen Stab im Hochofen angeordnet ist und entlang dem horizontalen Stab bewegbar ist oder alternativ gemeinsam mit dem Stab bewegbar ist, um die Belastungsoberfläche (2) abzutasten bzw. zu scannen.

5. System nach einem der vorhergehenden Ansprüche, wobei das System einen Laseremitter (3) oder eine Mehrzahl der Laseremitter (3) umfasst, die an verschiedenen Positionen angeordnet sind.

6. System nach einem der vorhergehenden Ansprüche, wobei das System zwei in einer Durchmesserrichtung des Hochofens gegenüberliegend angeordnete Laseremitter umfasst.

7. System nach einem der vorhergehenden Ansprüche, wobei die Bilder der Belastungsoberfläche eine Reihe von Vollbildern umfassen, die in einer Zeitfolge erhalten werden, und wobei die Bildverarbeitungseinrichtung umfasst:
ein Rechenverarbeitungssystem, das ausgelegt ist, um die Bilder der Belastungsoberfläche in Echtzeit zu empfangen und das empfangene aktuelle Vollbild mit zuvor empfangenen Vollbildern zu überlagern; und
eine Anzeigeeinrichtung, die ausgelegt ist, um das überlagerte Bild in Echtzeit anzuzeigen; wobei
das überlagerte Bild eine durch die Erfassungspunktmuster gebildete Belastungsoberflächen-Profilkurve umfasst.

8. System nach einem der vorstehenden Ansprüche, wobei die Bildverarbeitungseinrichtung ein Rechenverarbeitungssystem umfasst, das ausgelegt ist, um die Bilder der Belastungsoberfläche zu berechnen und zu verarbeiten und Belastungsoberflächeninformationsdaten entsprechend den Erfassungspunktmustern zu erhalten.

9. System nach Anspruch 8, wobei die Bildverarbeitungseinrichtung weiterhin eine Ausgabeeinrichtung umfasst und das Rechenverarbeitungssystem weiterhin die Belastungsoberflächeninformationsdaten verwendet, um eine Belastungsoberflächen-Profilkurve zu erzeugen und an die Ausgabeeinrichtung zu übertragen.

10. System nach Anspruch 8, wobei
die Bilder der Belastungsoberfläche umfassen eine Reihe von Vollbildern, die in einer Zeitfolge erhalten werden, und
das Rechenverarbeitungssystem das aktuelle Vollbild in Echtzeit und Belastungsoberflächen-Informationsdaten aus dem Erfassungspunktmuster in dem aktuellen Vollbild erhält und
die Belastungsoberflächen-Profilkurve in Echtzeit mittels der Belastungsoberflächeninformationsdaten erzeugt, die aus dem aktuellen Vollbild und den vorherigen Vollbildern erhalten werden.

11. Verfahren zur on-line-Messung einer Belastungsoberfläche in einem Hochofen zur Erfassung von Belastungsoberflächeninformationen in einem Hochofen, mit den folgenden Schritten:
Verwenden von mindestens einem Laserstrahl (4) zum kontinuierlichen Abtasten bzw. Scannen von zumindest einem Abschnitt der Belastungsoberfläche (2) in dem Hochofen entlang einer Abtasttrajektorie, wobei der Laserstrahl auf die Belastungsoberfläche auftrifft, um ein Erfassungspunktmuster zu bilden;
Erhalten von Bildern der Belastungsoberfläche von der Belastungsoberfläche unter Verwendung einer Videokamera, die an einer Ofenwand angeordnet ist, die einer Ebene gegenüberliegt, in der die Abtasttrajektorie des Laserstrahls (4) liegt, wobei jedes Bild ein Erfassungspunktmuster aufweist, das durch einen Endpunkt des Laserstrahls gebildet wird, der auf die Beladungsoberfläche auftrifft und diese abtastet bzw. scannt und als heller Punkt in den Bildern der Belastungsoberfläche erscheint; und
Erhalten der Belastungsoberflächeninformation auf der Grundlage der Bilder der Belastungsoberfläche.

12. Verfahren nach Anspruch 11, wobei die Belastungsoberflächeninformation eine Belastungsoberflächen-Prafilkurve aufweist.

13. Verfahren nach Anspruch 11 oder 12, wobei die Bilder der Belastungsoberfläche eine Reihe von Vollbildern umfassen, die in einer Zeitfolge erhalten werden, wobei ein aktuelles Vollbild in Echtzeit mit zuvor empfangenen Vollbildern überlagert wird und das überlagerte Bild zu der Anzeigeeinrichtung in Echtzeit ausgegeben wird;
wobei das überlagerte Bild eine durch die Erfassungspunktmuster gebildete Belastungsoberflächen-Profilkurve umfasst.

14. Verfahren nach einem der Ansprüche 11 bis 13, wobei
die Bilder der Belastungsoberfläche berechnet und verarbeitet werden, um Belastungsoberflächeninformationsdaten zu erhalten, die den Erfassungspunktzmustern entsprechen, und
die Belastungsoberflächeninformationsdaten dazu verwendet werden, um eine Belastungsoberflächen-Profilkurve zu bilden, die an eine Ausgabeeinrichtung übertragen werden soll.

15. Verfahren nach Anspruch 14, wobei die Bilder der Belastungsoberfläche eine Reihe von Vollbildern umfassen, die in einer Zeitfolge erhalten werden, und wobei ein aktuelles Vollbild in Echtzeit berechnet und verarbeitet wird, um Belastungsoberflächeninformationsdaten aus dem Erfassungspunktmuster in dem aktuellen Vollbild zu erhalten; und wobei die Belastungsoberflächen-Profilkurve in Echtzeit mittels der Belastungsoberflächeninformationsdaten erzeugt wird, die aus dem aktuellen Vollbild und den vorhergehenden Vollbildern erhalten werden.

## Revendications

1. Un système pour la mesure en ligne d'une surface de charge au sein d'un haut fourneau pour détecter une information de surface de charge, comprenant:
au moins un émetteur laser (3) disposé au-dessus de la surface de charge et émettant un faisceau laser (4) pour balayer en continu au moins une partie de la surface de charge le long d'une trajectoire de balayage;
**caractérisé en ce que** le système comporte en outre :
une caméra vidéo (5) disposé au niveau d'une paroi du four opposée à un plan dans lequel se situe la trajectoire de balayage du rayon laser (4) et configurée pour prendre des images de surface de charge, dont chacune comporte un motif de point de détection formé par un point terminal du faisceau laser incident et balayant la surface de charge et apparaissant tel un point lumineux dans les images de surface de charge; et
un dispositif de traitement d'image configuré pour recevoir les images de surface de charge de la caméra vidéo (5) et pour générer une information de surface de charge.

2. Le système selon la revendication 1, dans lequel l'information de surface de charge comprend une courbe de profil de la surface de charge.

3. Le système selon la revendication 1 ou 2, dans lequel le ou les émetteur(s) laser (3) est/sont disposé(s) pour pouvoir tourner autour d'un pivot, ou le ou les émetteur(s) laser (3) est/sont inclus(s) dans un scanner à laser avec dispositif de déflection de lumière.

4. Le système selon l'une quelconque des revendications précédentes, dans lequel le ou les émetteur(s) laser (3) est/sont disposé(s) sur une barre horizontale au sein du haut-fourneau et est/sont mobile(s) le long de la barre horizontale et alternativement est/sont mobile(s) avec la barre pour balayer la surface de charge (2).

5. Le système selon l'une quelconque des revendications précédentes, dans lequel le système comprend un émetteur laser (3) ou une pluralité d'émetteur laser (3) disposés à différentes positions.

6. Le système selon l'une quelconque des revendications précédentes, dans lequel le système comprend deux émetteurs laser disposés de manière opposée l'un par rapport à l'autre dans une direction d'un diamètre du haut fourneau.

7. Le système selon l'une quelconque des revendications précédentes, dans lequel les images de surface de charge comprennent une série d'images de trame obtenues séquentiellement et le dispositif de traitement d'image comprend:
un système de traitement informatique configuré pour recevoir les images de surface de charge en temps réel et superposer l'image de trame actuelle reçue avec des images de trame précédemment reçues;
un dispositif d'affichage configuré pour afficher l'image superposée en temps réel ; dans lequel
l'image superposée comporte un courbe de profile de surface de charge formée par les motifs de point de détection.

8. Le système selon l'une quelconque des revendications précédentes, dans lequel le dispositif de traitement d'image comprend un système de traitement informatique configuré pour calculer et traiter les images de surface de charge et obtenir des données d'information de surface de charge correspondant aux motifs de point de détection.

9. Le système de mesure selon la revendication 8, dans lequel le dispositif de traitement d'image comprend en outre des moyens de sortie, et le système de traitement informatique utilise en outre les données d'information de surface de charge pour générer une courbe de profl de surface de charge et la transfère aux moyens de sortie.

10. Le système selon la revendication 8, dans lequel
les images de surface de charge comprennent une série d'images de trame obtenues suivant une séquence temporelle ; et
le système de traitement informatique
calcule et traite le cadre l'image de trame courante en temps réel et obtient des données d'information de surface de charge à partir du motif de point de détection au sein de l'image de trame courante, et
génère la courbe de profil de surface de charge en temps réel au moyen de l'information de surface de charge obtenues à partir de l'image de trame courante et des images de trame précédentes.

11. Un procédé pour mesurer en ligne une surface de charge au sein d'un haut fourneau pour détecter des informations de surface de charge du haut fourneau, comprenant:
l'utilisation d'au moins un rayon laser (4) pour balayer de manière continue une partie de la surface de charge dans le haut fourneau le long d'une trajectoire de balayage, le rayon laser étant incident sur la surface de charge pour former un motif de point de détection;
obtenir des images de surface de charge de la surface de charge en utilisant une caméra vidéo disposée au niveau d'une paroi du four opposée à un plan dans lequel la trajectoire de balayage du rayon laser (4), dans lequel chaque image comporte un motif de point de détection formée par un point terminal du rayon laser incident et balayant la surface de charge et apparaissant sous la forme d'un point brillant dans les images de surface de charges ; et
obtenir l'information sur la surface de charge à partir des images de surface de charge.

12. Le procédé selon la revendication 11, dans lequel l'information de surface de charge comprend une courbe de profil de surface de charge.

13. Le procédé selon la revendication 11 ou 12, dans lequel les images de surface de charge comprennent une série d'images de trame obtenues séquentiellement, une image de trame courante étant superposée en temps réel avec des images de trame précédemment obtenues, et l'image superposée étant générée en sortie vers les moyens d'affichage ;
dans lequel l'image superposée comporte une courbe de profil de surface de charge formée par les motifs de points de détection.

14. Le procédé selon l'une quelconque des revendications 11 à 13, dans lequel les images de surface de charge sont calculées et traitées pour obtenir des données d'information de surface de charge correspondant aux motifs de points de détection, et
les données d'information de surface de charge sont utilisées pour former une courbe de profil de surface de charge transférée à des moyens de sortie.

15. Le procédé selon la revendication 14, dans lequel les images de surface de charge comprennent une série d'images de trame obtenues séquentiellement, et une image de trame courante est calculée et traitée en temps réel pour obtenir des données d'information de surface de charge à partir du motif de points de détection dans l'image de trame actuelle; et la courbe de profil de surface de charge est générée en temps réel au moyen des données d'information de surface de charge obtenues à partir de l'image de trame actuelle et des images de trame précédentes.
